# EUROPEAN PATENT APPLICATION

(11) **EP 1 231 053 A1**
(43) Date of publication of application: **14.08.2002**
(21) Application number: 01307524.7
(22) Date of filing: 04.09.2001
(51) Int. Cl.: B32B 27/08, B65D 30/08

(54) **Flexible non-foil-based retort package**

(30) Priority: 13.02.2001 US 782639
(71) Applicant: Sonoco Development, Inc., Hartsville, South Carolina 29550 (US)
(72) Inventor: Bensur, Francis J, Noblesville, Indiana 46060 (US)
(74) Representative: MacDougall, Donald Carmichael

(57) **Abstract**

A flexible non-foil-based packaging material for retort packages comprises a three-layer lamination including a layer of metallized polyester providing a gas barrier function. An outer layer of polyester is laminated to one side of the layer of metallized polyester, and an inner layer of cast polypropylene is laminated to an opposite side of the layer of metallized polyester. In another embodiment, a two-layer lamination is provided having a metallized polyester outer layer laminated to a cast polypropylene inner layer.

## Description

### FIELD OF THE INVENTION

The present invention relates to retort packages made from flexible packaging materials. The invention relates more particularly to a flexible non-foil-based packaging material and retort package made therefrom.

### BACKGROUND OF THE INVENTION

Food products are increasingly being packaged in flexible retort packages as an alternative to packaging them in metal cans and glass jars. The packaging material for flexible retort packages typically includes a middle moisture and gas barrier layer, a polymer outer layer adhered to one side of the middle gas barrier layer and forming the exterior surface of the package, and a heat-sealable inner polymer film layer adhered to the other side of the middle gas barrier layer and forming the interior surface of the package. The packaging material may also contain an additional polymer film layer. Foil has traditionally been used for the middle gas barrier layer because it offers high barrier values for oxygen and water vapor. The outer polymer film layer is generally polyester, and the inner polymer film layer is typically cast polypropylene. The additional polymer film layer may be nylon or the like.

Foil is relatively expensive, and is also susceptible to developing pin holes during processing, which impairs its barrier properties. Thus, it would be desirable to eliminate the foil layer. Flexible non-foil-based retort packages exist in the market. For example, there exist non-foil-based retort packages consisting of three-ply laminated structures having a polyester layer that is coated with aluminum oxide or glass to provide a gas barrier. However, these packaging structures are quite expensive and are prone to flex cracking when they are shaped into a stand-up pouch.

### SUMMARY OF THE INVENTION

The present invention addresses the above needs by providing a flexible non-foil-based retort packaging material and package that eliminates special coating materials such as aluminum oxide and glass that are prone to flex cracking. In accordance with one embodiment of the present invention, a flexible non-foil-based packaging material for retort packages comprises a three-layer lamination including a layer of metallized polyester providing the gas barrier function. An outer layer of polyester is laminated to the outward-facing side of the layer of metallized polyester, and an inner layer of cast polypropylene is laminated to the inward-facing side of the layer of metallized polyester. Each of the layers is capable of withstanding a retort process at a temperature in excess of 100°C without melting or substantially degrading. Where it is desired to print the package with indicia and/or graphics, the outer polyester layer is reversed printed prior to laminating it to the metallized polyester layer.

In accordance with another embodiment of the invention, the structure comprises a two-layer lamination comprising a metallized polyester outer layer and a cast polypropylene inner layer. Where it is desired to print the package with indicia and/or graphics, the outward-facing surface of the metallized polyester layer is printed and is then covered with a retortable lacquer or the like.

In the various structures in accordance with the invention, the layers are laminated to one another using either solvent-based or solventless retortable laminating adhesives.

The invention offers distinct advantages in cost of materials and manufacturing relative to foil-based retort packaging materials and non-foil-based retort packaging materials employing specially coated polyester, and eliminates or at least substantially reduces the problems of flex cracking associated with some prior retort packages as noted above, while providing good barrier performance for oxygen and water vapor.

### BRIEF DESCRIPTION OF THE DRAWINGS

The above and other objects, features, and advantages of the invention will become more apparent from the following description of certain preferred embodiments thereof, when taken in conjunction with the accompanying drawings in which:
FIG. 1 is a cross-sectional view through a flexible non-foil-based retort package in accordance with one embodiment of the invention;
FIG. 2 is an enlarged cross-sectional view through the packaging material of the package of FIG. 1; and
FIG. 3 is an enlarged cross-sectional view through a packaging material in accordance with another embodiment of the invention.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

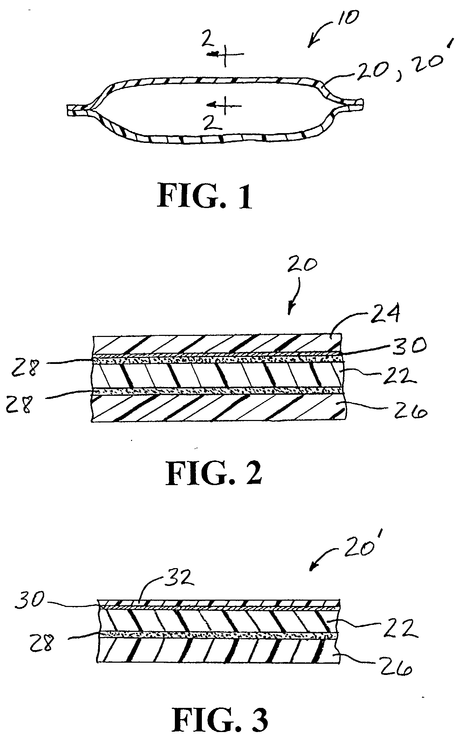

FIG. 1 shows a cross-sectional view through a flexible non-foil-based retort package **10** made from a three-layer laminate structure **20** in accordance with a first embodiment of the invention. The structure **20** comprises a middle layer **22** of metallized polyester, an outer layer **24** of polyester, and an inner layer **26** of cast polypropylene.

FIG. 2 is an enlarged cross-sectional view through the structure **20** to better show the details of its construction. The three film layers **22, 24, 26** are laminated to one another with adhesive layers **28.** The adhesive layers **28** can comprise any solvent-based retortable laminating adhesive approved for use in retort food packaging. In the United States, the adhesive **28** must comply with FDA (Food and Drug Administration) regulation 21 CFR 177.1390. Examples of suitable adhesives for the adhesive layers **28** include those available from the Liofol Company under the product designations 7900/7283 and 7909/7283 (solvent-based), and 7919/7291 and 7990/6092 (solventless).

Where the package is to be provided with indicia and/or graphics on its exterior, the structure **20** includes a layer of ink **30** printed on the side of the outer layer **24** that faces the middle layer **22.**

The outer polyester layer **24** preferably comprises a polyester able to withstand a retort process, which typically involves exposing the package **10** having its food contents sealed therein to a temperature in excess of 100°C (e.g., a temperature of about 115°C to 130°C) for an extended period of time (e.g., 20 minutes or more). Polyethylene teraphthalate (PET) is a suitable material for this purpose. A non-limiting example of such a suitable polyester is a product designated MELINEX® 813 available from DuPont. MELINEX® 813 is pretreated on one side with a coating that provides improved adhesion to materials such as adhesives and solvent-based or water-based inks. This pretreated side of the layer **24** faces the middle layer **22.**

The middle layer **22** of metallized polyester provides the needed barrier to oxygen and water vapor for the retort package. The metallized polyester is capable of withstanding retort conditions as described above. As noted above, PET is a suitable material for withstanding retort conditions. A non-limiting example of such a material for the middle layer **22** is a product designated MELINEX® 840 from DuPont.

The inner layer **26** comprises a retortable grade of cast polypropylene (CPP). Such materials are known in the art and hence are not further described herein.

The middle and outer layers **22** and **24** each preferably has a thickness in the range of about 32ga to 96ga. The inner layer **26** preferably has a thickness in the range of about 0.04 mm to 0.10 mm (1.75-4.0 mils). The three-layer laminate **20** preferably has an overall thickness in the range of about 0.06 mm to 0.15 mm (2.4-6.0 mils).

A second embodiment of the invention is depicted in FIG. 3. A flexible non-foil-based structure **20'** for a retort package is shown, comprising a two-layer lamination. The structure **20'** comprises an outer layer **22** of metallized polyester laminated to an inner layer **26** of cast polypropylene via a layer **28** of retortable laminating adhesive disposed therebetween. Where the package **10'** is to have indicia and/or graphics on its exterior, the outer layer **22** is printed on its outward-facing surface with ink **30** and then the ink is covered with a layer **32** of retortable lacquer or the like. Such lacquers are known in the art and hence are not further described herein.

The outer and inner layers **22** and **26** of the two-layer laminate **20'** preferably have thicknesses in accordance with the ranges previously stated for these layers. The two-layer laminate **20'** preferably has an overall thickness in the range of about 0.05 mm to 0.10 mm (2.0-4.0 mils).

With either the two-layer or the three-layer packaging structure in accordance with the invention, a retort package **10** is constructed by disposing two sheets of the packaging structure **20, 20'** (which can be two portions of a single sheet of the material) in opposing relation and heat-sealing the peripheral edge portions of the sheets to each other via the heat-sealable cast polypropylene inner layers of the sheets so as to form a pouch or the like.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A flexible non-foil-based retort packaging structure, comprising:
a layer of metallized polyester capable of withstanding a retort process at a temperature in excess of 100°C without melting or substantially degrading;
a layer of cast polypropylene laminated to one side of the layer of metallized polyester, the layer of cast polypropylene being capable of withstanding the retort process at a temperature in excess of 100°C without melting or substantially degrading.

2. The flexible non-foil-based retort packaging structure of claim 1, further including a layer of polyester laminated to the other side of the layer of metallized polyester, the layer of polyester being capable of withstanding the retort process at a temperature in excess of 100°C without melting or substantially degrading.

3. The flexible non-foil-based retort packaging structure of claim 1 or 2, wherein the layers are laminated to one another using solvent-based retortable laminating adhesives.

4. The flexible non-foil-based retort packaging structure of claim 1 or 2, wherein the layers are laminated to one another using solventless retortable laminating adhesives.

5. The flexible non-foil-based retort packaging structure of claim 1 or 2, wherein the layer of polyester is printed with ink on the side of the layer of polyester that faces the layer of metallized polyester.

6. The flexible non-foil-based retort packaging structure of claim 1 or 2, wherein the polyester layers comprise polyethylene teraphthalate.

7. A flexible non-foil based retort package, comprising at least two opposing portions of the packaging structure of claim 2 or 3 having peripheral edge portions of the opposing portions heat-sealed together so as to form a pouch configuration.
